(19) Europäisches Patentamt

European Patent Office

Office européen des brevets

(11) Publication number: **0 376 339 B1**

# EUROPEAN PATENT SPECIFICATION

(45) Date of publication of patent specification: **02.11.94**

(51) Int. Cl.⁵: **C09K 11/81**

(21) Application number: **89124125.9**

(22) Date of filing: **28.12.89**

(54) **Phosphor.**

(30) Priority: **28.12.88 JP 329083/88**

(43) Date of publication of application:
**04.07.90 Bulletin 90/27**

(45) Publication of the grant of the patent:
**02.11.94 Bulletin 94/44**

(84) Designated Contracting States:
**DE FR GB IT NL**

(56) References cited:

**PATENT ABSTRACTS OF JAPAN, vol. 13, no. 79 (C-571)[3427], 22nd February 1989; & JP-A-63 268 790**

**PATENT ABSTRACTS OF JAPAN, vol. 13, no. 72 (C-570)[3420], 17th February 1989; & JP-A-63 264 694**

(73) Proprietor: **KASEI OPTONIX, LTD.**
**12-7, Shibadaimon 2-chome**
**Minato-ku**
**Tokyo 105 (JP)**

(72) Inventor: **Kaneda, Hideaki**
**5-1, Tsutsujigaoka**
**Midori-ku**
**Yokohama-shi Kanagawa-ken (JP)**
Inventor: **Takatuka, Yuji**
**2-20, Minamikamonmiya**
**Odawara-shi**
**deceased (JP)**
Inventor: **Hase, Takashi**
**575, Nakano**
**Ebina-shi Kanagawa-ken (JP)**

(74) Representative: **Wächtershäuser, Günter, Prof. Dr.**
**Patentanwalt**
**Tal 29**
**D-80331 München (DE)**

**Description**

The present invention relates to a novel phosphor. More particularly, it relates to a trivalent metal phosphate phosphor, whereby emission of various colors with high luminance can be obtained by using certain specific activators.

Heretofore, as trivalent metal phosphate phosphors having rare earth elements as activators, $(Ln_{1-x}Ln'_x)PO_4$ wherein Ln is yttrium, gadolinium or lanthanum and Ln′ is europium, terbium, samarium, dysprosium, praseodymium, neodium, ytterbium, holomium and erbium [R. C. Roop, J. Electrochem. Soc. 115, 8, 841 (1968)], $(Ln,Ce)PO_4$ wherein Ln is yttrium, gadolinium or lanthanum [R. C. Roop, J. Electrochem. Soc. 115, 5, 531 (1968)], $(La,Ce,Tb)PO_4$ [J. C. Bourcet et. al., Rare Earth Research Conf. 441 (1971)], $(La_{1-x}Gd_x)P_3O_9{:}Ce, Tb$ [H. S. Kiliaan et. al., J. Solid State Chem. 74, 1, 39 (1988)]. Among these known phosphors, the $LnPO_4$ system is a rare earth orthophosphate and a crystal matrix having a monazite structure (Ln': e.g. lanthanum, gadolinium) or a zenotime structure (Ln': e.g. yttrium), and the $Ln'P_3O_9$ system is a rare earth methaphosphate.

The above-mentioned conventional rare earth-activated phosphors are known to show emissions corresponding to the respective activating rare earth elements under excitation by various means such as ultraviolet rays, electron beams, X-rays or vacuum ultraviolet rays. Some of them have already been practically used for certain specific purposes. However, from the practical viewpoint, phosphors having higher emission luminance than these phosphors are desired.

Accordingly, it is an object of the present invention to provide a novel phosphate phosphor showing an emission with higher luminance than the conventional rare earth phosphate phosphors.

In order to accomplish the above object, the present inventors have conducted a research for a rare earth phosphate type matrix suitable for activating various rare earth elements. As a result, they have found that when a $Ln_3PO_7$ rare earth phosphate is used as a matrix which is different from the conventional $LnPO_4$ (Ln: as defined above) rare earth orthophosphate or $LnP_3O_9$ (Ln: as defined above) rare earth methaphosphate matrix, and a suitable amount of a rare earth is activated to this matrix, it is possible to obtain a phosphor showing an emission with high luminance under excitation by ultraviolet rays, electron beams, X-rays or vacuum ultraviolet rays, particularly, a phosphor showing an emission corresponding to each activating rare earth element with high luminance under excitation by ultraviolet rays and vacuum ultraviolet rays. The present invention has been accomplished on the basis of this discovery.

Thus, the present invention provides a trivalent metal phosphate phosphor having a composition of the formula:

$(Ln_{1-x} Ln'_x)_3 PO_7$    (I)

wherein Ln is at least one member selected from yttrium, lanthanum, gadolinium and lutetium, Ln' is at least one member selected from terbium, cerium, praseodymium, samarium, dysprosium, erbium, thulium and holmium, and x is a number satisfying $0.0001 \leq x \leq 0.5$.

With the above-mentioned rare earth-activated orthophosphate phosphor or methaphosphate phosphor, it has been difficult to obtain an efficient emission under excitation by ultraviolet rays (e.g. 254 nm) when e.g. terbium (Tb) is used alone as the activator. Therefore, it used to be necessary to increase the efficiency by using cerium (Ce) as a coactivator. The phosphor of the present invention is a novel phosphor showing an emission equal or higher even by a single use of Tb than the $LnPO_4{:}Ce,Tb$ phosphor, such as a $LaPO_4{:}Ce,Tb$ phosphor, which is presently practically used.

Now, the present invention will be described in detail with reference to the preferred embodiments.

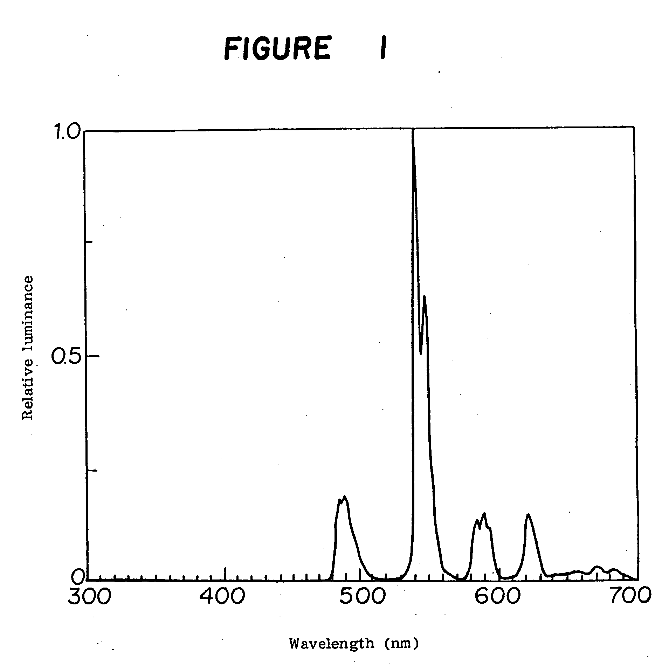

In the accompanying drawings, Figure 1 is the emission spectrum of the $(Y_{0.9}Tb_{0.1})_3PO_7$ phosphor (Example 1) of the present invention.

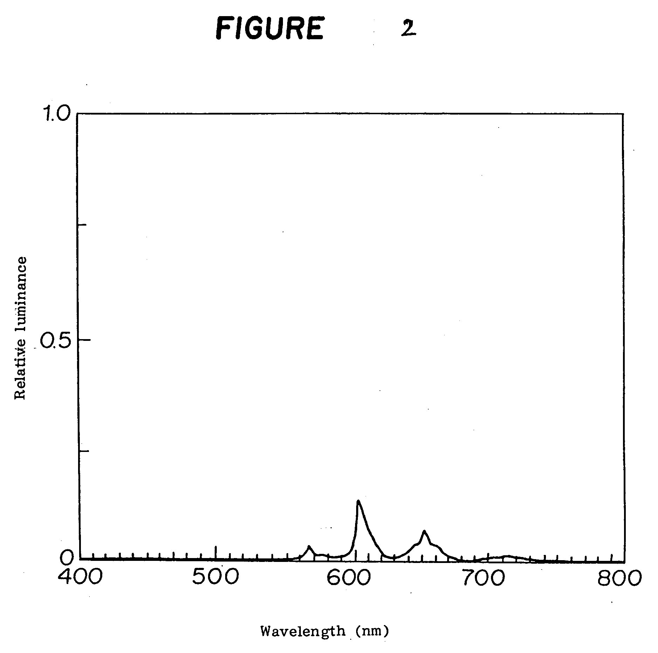

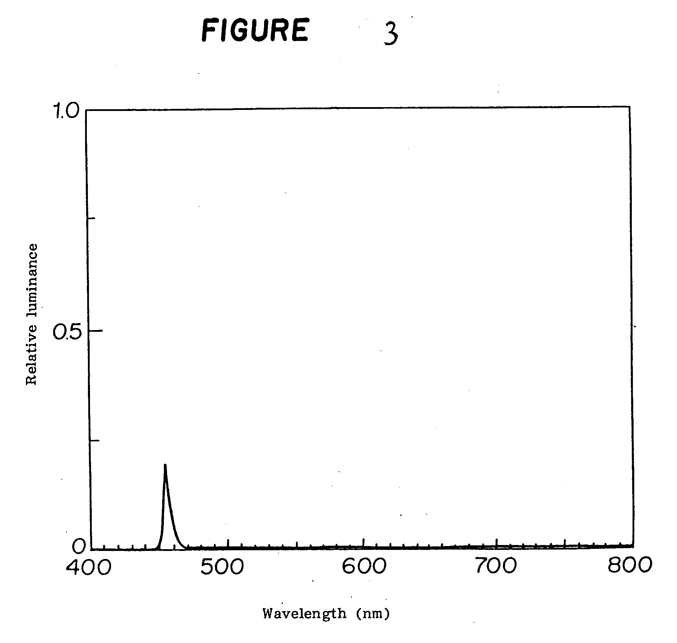

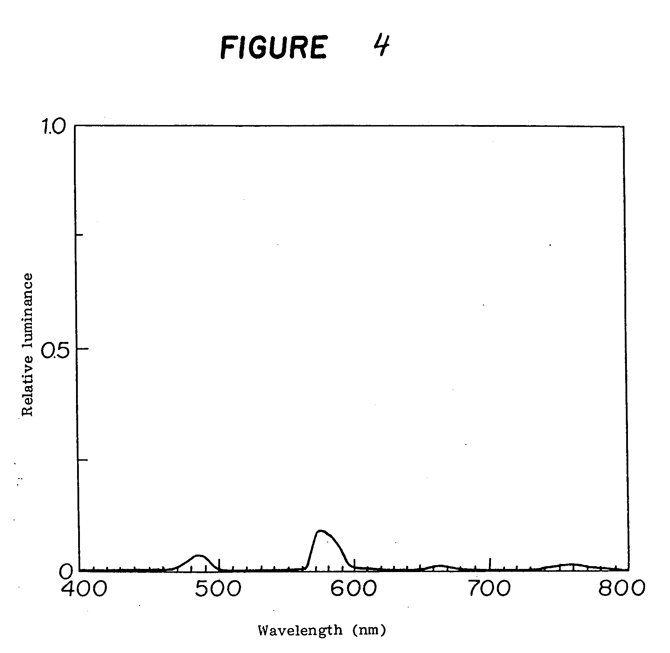

Figures 2 to 4 are the emission spectra of phosphors of the present invention wherein $Y_3PO_7$ is used as the phosphor matrix and samarium, thulium and dysprosium are, respectively, used as activators (Examples 4, 5, and 6, respectively).

The phosphor of the present invention having a composition of the formula I is produced by the following method.

Firstly, as the raw materials for the phosphor,

(a) at least one compound selected from a group of compounds consisting of a first group of compounds consisting of yttrium oxide ($Y_2O_3$), lanthanum oxide ($La_2O_3$), gadolinium oxide ($Gd_2O_3$) and lutetium oxide ($Lu_2O_3$) and a second group of compounds consisting of yttrium compounds, lanthanum compounds, gadolinium compounds and lutetium compounds which are capable of being readily converted to $Y_2O_3$, $La_2O_3$, $Gd_2O_3$ and $Lu_2O_3$, respectively, at high temperatures,

(b) at least one compound selected from a group of compounds consisting of a first group of compounds consisting of terbium oxide ($Tb_4O_7$), cerium oxide ($CeO_2$), praseodymium oxide ($Pr_6O_{11}$), samarium oxide ($Sm_2O_3$), dysprosium oxide ($Dy_2O_3$), erbium oxide ($Er_2O_3$), thulium oxide ($Tm_2O_3$) and holmium oxide ($Ho_2O_3$) and a second group of compounds consisting of terbium compounds, cerium compounds, europium compounds, praseodymium compounds, samarium compounds, dysprosium compounds, erbium compounds, thulium compounds and holmium compounds which are capable of being readily converted to $Tb_4O_7$, $CeO_2$, $Pr_6O_{11}$, $Sm_2O_3$, $Dy_2O_3$, $Er_2O_3$, $Tm_2O_3$ and $Ho_2O_3$, respectively, at high temperatures, and

(c) at least one compound selected from a group of compounds consisting of a first group of compounds consisting of ammonium primary phosphate (($NH_4$)$H_2PO_4$) and ammonium secondary phosphate (($NH_4$)$_2HPO_4$) and a second group of compounds capable of being readily converted to a phosphoric acid source at high temperatures,

may be used, or

(a) co-precipitated oxides of at least one member selected from the group consisting of yttrium, lanthanum, gadolinium and lutetium and at least one member selected from the group consisting of terbium, cerium, europium, praseodymium, samarium, dysprosium, erbium, thulium and holmium, and

(b) at least one compound selected from a group of compounds consisting of a first group of compounds consisting of ammonium primary phosphate (($NH_4$)$H_2PO_4$) and ammonium secondary phosphate (($NH_4$)$_2HPO_4$) and a second group of compounds capable of being readily converted to a phosphoric acid source at high temperatures, may be employed.

(c) When magnesium is incorporated as the case requires, at least one compound selected from the group of compounds consisting of a first group of compounds consisting of magnesium chloride ($MgCl_2 \cdot 6H_2O$), magnesium hydroxide [$Mg(OH)_2$], magnesium nitrate [$Mg(NO_3)_2 \cdot 6H_2O$] and magnesium carbonate ($MgCO_3$) and a second group of magnesium compounds which can readily be converted to MgO at high temperatures, may be employed.

The above raw materials, and accordingly the resulting phosphors, may contain a very small amount at a level of from 10 to 1,000 ppm of antimony, tin, lead or zinc; a monovalent metal such as lithium, sodium or potassium; a divalent metal such as calcium, barium or strontium; bismuth, silicon, hafnium, zirconium or indium, for the purpose of improving the luminance or the useful life of the phosphors.

The above phosphor raw materials are weighed in the respective amounts required to satisfy the compositional formula:

$$(Ln_{1-x} Ln'_x)_3 PO_7$$

wherein Ln, Ln' and x are as defined above, or in the case where magnesium is incorporated, to satisfy the compositional formula:

$$(Ln_{1-x} Ln'_x)_3 PO_7 \cdot aMg_3(PO_4)_2$$

wherein Ln, Ln' and x are as defined above, and a is a number satisfying $0 \le a \le 1$, and thoroughly mixed. The mixing may be conducted in a dry system by means of a ball mill, a mixer mill or a mortar, or in a wet system in a paste state by means of water or like as a medium.

Then, the mixture of phosphor raw materials is filled in a heat resistant vessel such as an alumina crucible or quartz crucible, followed by firing. The firing is conducted once or twice at a temperature of from about 500 to 1,700°C in air, in a neutral atmosphere such as an argon gas atmosphere or a nitrogen gas atmosphere or in a reducing atmosphere such as a nitrogen gas atmosphere or a carbon dioxide atmosphere containing a small amount of hydrogen gas. When the firing is conducted twice, the phosphor mixture is returned to room temperature after completion of the first firing, then pulverized, if necessary, and then fired again.

In the firing, in order to certainly change the valence of the activator such as terbium to trivalent, it is preferred to conduct at least the final firing (i.e. the first firing when the firing is conducted only once) in a neutral or reducing atmosphere. The firing time varies depending upon e.g. the weight of the mixture of phosphor raw materials filled in the heat resistant vessel, but is usually within a range of from 2 to 5 hours within the above-mentioned firing temperature range. To facilitate the reaction during the firing, an alkali metal compound or a boron compound may be used as a flux, whereby the firing can be conducted at a lower temperature in a shorter period of time, and the emission properties may thereby be improved.

After firing, the obtained fired product is subjected to various treatments which are commonly employed for the preparation of phosphors, such as pulverization, washing, drying and sieving, to obtain a phosphor of the present invention.

The phosphor of the present invention shows a blue to red emission of high luminance under excitation by ultraviolet rays, electron beams, X-rays or vacuum-ultraviolet rays, and therefore is useful for fluorescent lamps, cathode ray tubes, X-ray image converting apparatus or plasma display apparatus. It is particularly noteworthy that phosphor of the present invention shows an emission with higher luminance than the known cerium and terbium-activated $LaPO_4$ phosphor under excitation by ultraviolet rays or vacuum ultraviolet rays. Therefore, it is also useful, for example, as a green component of a 3- or 4-wavelength high color rendering lamp.

As will be shown in the Examples given hereinafter, the phosphor of the present invention is best from the viewpoint of luminance when Ln is Y, followed by Gd, La and Lu in this order. Therefore, the matrix of the phosphor of the present invention is preferably composed of a solid solution of Y or mainly Y with the rest being at least one of Gd, La and Lu. The molar ratio of Y in such a case is preferably selected within a range of from 0.7 to 1 mol, the rest of not higher than 0.3 mol being preferably selected in the order of Gd, La and Lu.

When used as various color emitting phosphors for fluorescent layers of high color rendering fluorescent lamps, the phosphors of the present invention satisfy the following various properties.

1) The blue-emitting phosphor has the main emission wavelength within a range of from 400 to 460 nm, preferably at around 450 nm, the green-emitting phosphor has the main emission wavelength within a range of from 510 to 560 nm, preferably at around 540 nm, and the red-emitting phosphor has the main emission wavelength within a range of from 600 to 640 nm, preferably at around 610 nm. Further, the bluish green-emitting phosphor has the main emission wavelength within a range of from 460 to 490 nm, preferably at around 480 nm.

2) The emission luminance is high.

3) The deterioration of the emission luminance i.e. the reduction with time of the emission luminance, is little.

Further, the phosphors of the present invention may be applied to certain specific colors and may be used in combination with the following conventional phosphors for fluorescent layers of high color rendering lamps. As a conventional blue-emitting phosphor, a bivalent europium-activated barium•magnesium aluminate phosphor (hereinafter referred to simply as a BAM•$Eu^{2+}$ phosphor) or alkaline earth halophosphate phosphor, is used. As a green-emitting phosphor, a cerium•terbium-activated lanthanum phosphate phosphor or magnesium aluminate phosphor, is used. As a red-emitting phosphor, a trivalent europium-activated yttrium oxide phosphor is used. As a bluish green-emitting phosphor, a bivalent europium-activated alkaline earth aluminate phosphor, alkaline earth halophosphate phosphor or alkaline earth haloborate phosphor, is used.

In the following Examples, the relative luminance of each phosphor was conducted by measuring the powder luminance under ultraviolet rays having a wavelength of 253.7 nm.

EXAMPLES 1 TO 3

Coprecipitated oxides of Y or Gd and Tb as the Y or Gd source and the Tb source, and $(NH_4)_2HPO_4$ as the phosphoric acid source, were weighed to bring the stoichiometrically composition of the mixture to the prescribed formula, and 10% by weight of ammonium chloride was added thereto as a flux. The mixture was thoroughly mixed, and the powder mixture was then put in an alumina crucible and fired in air at 500°C for 2 hours. After cooling to room temperature, the fired product was pulverized and then put in an alumina crucible again and fired in a reducing atmosphere at 1,400°C for 2 hours, followed by prescribed treatment to obtain a phosphor as identified in Table 1 as Examples 1 to 3. For the purpose of comparison, a $LaPO_4$:Ce,Tb phosphor was prepared in the same manner (Comparative Example).

With respect to the phosphors thus obtained, the relative luminance was measured. The results are shown in Table 1.

As is evident from Table 1, the properties are generally improved over the $LaPO_4$:Ce,Tb phosphor. Further, the emission spectrum of $(Y_{0.9}Tb_{0.1})_3PO_7$ is shown in Figure 1.

EXAMPLES 4 TO 7

Coprecipitated oxides of Y and Sm, Tm, Dy or Pr as the Y source and the Sm, Tm, Dy or Pr source and $(NH_4)_2HPO_4$ as the phosphoric acid source, were weighed to bring the composition of the mixture to the stoichiometrically prescribed formula, and the phosphors as identified in Examples 4 to 7 in Table 1 were prepared in the same manner as in Examples 1 to 3, and their properties were measured.

As shown in Figures 2 to 5, excellent bright emissions specific to the respective rare earth elements are obtainable.

EXAMPLES 8 TO 10

As the Mg source, $MgCl_2 \cdot 6H_2O$ was weighed to bring the composition of the mixture to the stoichiometrically prescribed formula, and the phosphors as identified in Examples 8 to 10 in Table 1 were prepared in the same manner as in Examples 1 to 3, and their properties were measured. As a result, an excellent emission spectrum substantially the same as shown in Figure 1, was obtained.

Table 1

| | Composition | Relative luminance (%) | Emitted color | Reference |
|---|---|---|---|---|
| Example 1 | $(Y_{0.9}Tb_{0.1})_3PO_7$ | 110 | | |
| Example 2 | $(Gd_{0.9}Tb_{0.1})_3PO_7$ | 102 | | Figure 1 |
| Example 3 | $(Y_{0.8}Gd_{0.1}Tb_{0.1})_3PO_7$ | 105 | | |
| Comparative Example | $LaPO_4:Ce,Tb$ | 100 | | |
| Example 4 | $(Y_{0.99}Sm_{0.01})_3PO_7$ | | Red | Figure 2 |
| Example 5 | $(Y_{0.995}Tm_{0.005})_3PO_7$ | | Blue | Figure 3 |
| Example 6 | $(Y_{0.99}Dy_{0.01})_3PO_7$ | | White | Figure 4 |
| Example 7 | $(Y_{0.99}Pr_{0.01})_3PO_7$ | | Orange | |
| Example 8 | $(Y_{0.875}Tb_{0.125})_3PO_7 \cdot 0.2Mg_3(PO_4)_2$ | 111 | | |
| Example 9 | $(Y_{0.875}Tb_{0.125})_3PO_7 \cdot 0.3Mg_3(PO_4)_2$ | 109 | | Figure 1 |
| Example 10 | $(Y_{0.825}La_{0.05}Tb_{0.125})_3PO_7 \cdot 0.1Mg_3(PO_4)_2$ | 104 | | |
| Comparative Example | $LaPO_4:Ce,Tb$ | 100 | | |

The trivalent metal phosphate phosphor of the present invention is a novel $Ln_3PO_7$ type phosphor, whereby a remarkably high luminance is obtainable as compared with conventional phosphors.

# EP 0 376 339 B1

## Claims

1. A trivalent metal phosphate phosphor having a composition of the formula:

$$(Ln_{1-x} Ln'_x)_3 PO_7 \qquad (I)$$

wherein Ln is at least one member selected from the group consisting of yttrium, lanthanum, gadolinium and lutetium, Ln' is at least one member selected from the group consisting of terbium, cerium, praseodymium, samarium, dysprosium, erbium, thulium and holmium, and x is a number satisfying $0.0001 \leqq x \leqq 0.5$.

2. The phosphor according to Claim 1, wherein x is a number satisfying $0.005 \leqq x \leqq 0.3$.

3. The phosphor according to Claim 1, wherein Ln is ytttrium or mainly yttrium and Ln' is terbium.

4. The phosphor according to Claim 1, which further contains magnesium in the composition.

## Patentansprüche

1. Leuchtstoff aus Phosphat dreiwertigen Metalles mit einer Zusammensetzung der Formel:

$$(Ln_{1-x}Ln'_x)_3 PO_7 \qquad (I)$$

worin Ln mindestens eines, ausgewählt aus der Gruppe bestehend aus Yttrium, Lanthan, Gadolinium und Lutetium ist, Ln' mindestens eines, ausgewählt aus der Gruppe bestehend aus Terbium, Cer, Praseodym, Samarium, Dysprosium, Erbium, Thulium und Holmium ist und x eine Zahl ist, die der Beziehung genügt $0{,}0001 \leqq x \leqq 0{,}5$.

2. Leuchtstoff nach Anspruch 1, worin x eine Zahl ist, die der Beziehung genügt $0{,}005 \leqq x \leqq 0{,}3$.

3. Leuchtstoff nach Anspruch 1, worin Ln Yttrium oder hauptsächlich Yttrium ist und Ln' Terbium ist.

4. Leuchtstoff nach Anspruch 1, der weiter Magnesium in der Zusammensetzung enthält.

## Revendications

1. Matière luminophore constituée de phosphate de metal trivalent dont la composition répond à la formule:

$$(Ln_{1-x}Ln'_x)_3 PO_7 \qquad (I)$$

dans laquelle Ln est au moins un membre choisi parmi le groupe constitué d'yttrium, de lanthane, de gadolinium et de lutécium, Ln' est au moins un membre choisi parmi le groupe constitué de terbium, cérium, praséodyme, samarium dysprosium, erbium, thulium et holmium, et x est un nombre qui vérifie la relation $0{,}0001 \leqq x \leqq 0{,}5$.

2. Matière luminophore selon la revendication 1, dans laquelle x est un nombre qui vérifie la relation $0\ 005 \leqq x \leqq 0{,}3$.

3. Matière luminophore selon la revendication 1, dans laquelle Ln est l'yttrium ou principalement de l'yttrium et Ln' est le terbium.

4. Matière luminophore selon la revendication 1, dont la composition comprend en outre du magnésium.

# FIGURE   I

# FIGURE 2

# FIGURE 3

# FIGURE 4